# EUROPÄISCHE PATENTSCHRIFT

(11) **EP 1 743 202 B1**
(45) Veröffentlichungstag und Bekanntmachung des Hinweises auf die Patenterteilung: **31.03.2010**
(21) Anmeldenummer: 05730894.2
(22) Anmeldetag: 15.04.2005
(51) Int. Cl.: G02B 7/00, F21V 21/28, F21S 8/00, G02B 26/10, G02B 6/00

(54) **SPIEGELGELENKARM**
JOINTED MIRROR ARM
BRAS ARTICULE A MIROIRS

(30) Priorität: 03.05.2004 DE 202004007134 U
(43) Veröffentlichungstag der Anmeldung: 17.01.2007
(73) Patentinhaber: LINOS Photonics GmbH & Co. KG, 37081 Göttingen (DE)
(72) Erfinder: DEYERLER, Michael, 37081 Göttingen (DE)
(74) Vertreter: Wagner, Carsten
(86) Internationale Anmeldenummer: PCT/EP2005/004042
(87) Internationale Veröffentlichungsnummer: WO 2005/109064

(56) Entgegenhaltungen:
- EP-A- 1 389 710
- DE-A1- 2 229 683
- DE-A1- 2 930 308
- DE-A1- 3 641 910
- DE-A1- 10 027 148
- US-B1- 6 513 962

## Beschreibung

Die Erfindung betrifft einen Spiegelgelenkarm, nämlich einen Zwischengelenkarm mit zumindest zwei über ein einen Umlenkspiegel aufweisendes Gelenk miteinander verbundenen und aufgrund dieses Gelenks zueinander in verschiedenen Raumwinkeln anzuordnenden, einen Strahlengang für die Strahlung bildenden Rohrteilen, mit einem ortsfesten Eingang an einem ersten Rohrteil für die Einleitung einer Strahlung von einer stationären optischen Quelle und mit einem von dem Ort des Eingangs verschiedenen, beliebigen Ort des Ausgangs des Zwischengelenkarms an einem letzten Rohrteil für den Austritt der Strahlung.

Solche Spiegelgelenkarme sind an sich bekannt und werden für den Transfer von Strahlung, z.B. jene eines Laser von einer stationären Quelle zu einem örtlich variablen Einsatzort, z.B. ein Handstück am Ende und hinter dem Ausgang des Spiegelgelenkarms an dem letzten Rohrstück transferiert, wie es z.B. beim Einsatz von Lasern in der Dermätologie, bei der Dentaltechnik oder Chirurgie der Fall ist. Hierbei wird am Eingang eine statische Strahlen in dem Sinne eingekoppelt, dass der Laser starr bezüglich des Spiegelgelenkarms angeordnet ist und in diesen dessen Strahlung eingekoppelt wird; die Ablenkung und Änderung der Lage des austretenden Strahls kann durch Bewegung und örtliche verlagerung des Austritts des Spiegelgelenkarms bzw. des dort befindlichen Endstückes, z.B. Handstückes erfolgen. Statt dessen ist auch die Strahlablenkung mittels eines Scanners im Handstück hinter dem Spiegelgelenkarm möglich.

Nachteilig ist hierbei, dass die Strahlablenkung mittels des Scanners hierfür aufwendig miniaturisiert werden muss und durch die Bewegung des Austritts des Spiegelgelenkarms bzw. des Handstücks auch dynamischen Störungen ausgesetzt ist.

Der Erfindung liegt die Aufgabe zugrunde, einen gattungsgemässen Spiegelgelenkarm mit einer Strahlablenkung einfacher und störungsunanfälliger auszubilden.

Diese Aufgabe wird durch einen Spiegelgelenkarm gemäss Hauptanspruch gelöst.

Erfindungsgemäss wird also mit anderen Worten der Scanner vom Austritt bzw. dem Handstück in den statischen Teil vor dem Eingang des Spiegelgelenkarms verlagert und ein räumlich ausgedehntes Bild oder Pupille, z. B. des Scanners von dem Eintritt durch den Strahlengang des Spiegelgelenkarms an dessen Austritt optisch abgebildet.

Auf diese Weise bleibt mit Vorteil der vom gescannten Strahl benötigte Querschnitt auch bei großen Übertragungslängen klein. Auch unterliegt der Scanner hinsichtlich seiner Baugrössen keiner Limitierung, denn er kann mit Standard-Bauteilen vor dem Eintritt des Spiegelgelenkarms ohne bauliche Beschränkung angeordnet werden, wobei das Abbildungssystem aus ein oder mehreren Abbildungsstufen besteht und wobei jede Abbildungsstufe mit zumindest zwei zwischen sich einen Zwischenfokus aufweisenden Linsen versehen ist.

Mit Vorteil können die Gelenke mit den Umlenkspiegeln an beliebigen Stellen im Strahlengang platziert werden. Zweckmässigerweise werden Stellen bevorzugt, an denen der Umlenkspiegel nicht am Ort eines Zwischenfokus liegt, um Brennflecke auf den Umlenkspiegeln zu vermeiden.

Durch die Drehung der Gelenke des Spiegelgelenkarms entsteht einen Rotation des transferrierten Bildes. Dadurch geht die Koordinatenzuordnung zwischen Eingang und Ausgang verloren. Diese ist bei speziellen Anwendungen von Bedeutung ( z.B. gezieltes Anfahren von Koordinaten über XY-Scanner ). Der Rotationszustand des transferierten Bildes kann gemessen werden und durch spezielle Bildroationsoptiken, z.B. mit Hilfe von Marken kompensiert werden. Als Marke können u.a. dienen:
- eine sebstleuchtende oder beleuchtete Struktur
- ein Struktur wie oben im Abbildungsfeld ( Punkt, Linie etc. )
- eine Struktur wie oben am Rand des Abgebildeten Feldes
- eine Struktur wie oben auf einer Strahlbegrenzungsfläche ( z.B. Blende) eine bestimmte Scanposition oder ein Scanmuster

Die Messung kann erfolgen durch folgende aufgezählten Massnahmen:
- Abbildung einer Marke durch den Spiegelgelenkarm.
- Messung und Auswertung der Orientierung des Abbildes. (= Bildlage der abgebildeten Struktur)
- Messung der Bildlage mittels positions-empfindlichem Detektor
- Messung mittels Einzeldetektor z.B. auf Signalmaximum
- Messung über Ansteuerung und Regelung einer Bildrotations Stufe über o.g. Sensorsignale.

Zusätzlich sind folgende Einsätze des erfindungsgemässen Spiegelgelenkarms möglich:
- Nutzung des Meßstrahlenganges und Sensorik für Gesamtsystem Monitoring.
- Kontrolle des Justagezustandes des Spiegelgelenkarms
- Sicherheitsschaltung für z.B. Laser. d.h. Bricht z.B. der Arm, verschwindet auch das Monitorsignal und es kann dann die Lichtquelle (z.B. Laser) abgeschaltet werden.

Weitere Zweckmässige Ausgestaltungen und Weiterbildungen der Erfindung werden nachfolgend unter Bezugnahme auf die Zeichnung näher erläutert. In dieser zeigt:
- Figur 1: einen Schematischen Strahlengang in einem Spiegelgelenkarm
- Figur 2: einen Spiegelgelenkarm mit dem Strahlengang, im schematischen Querschnitt.

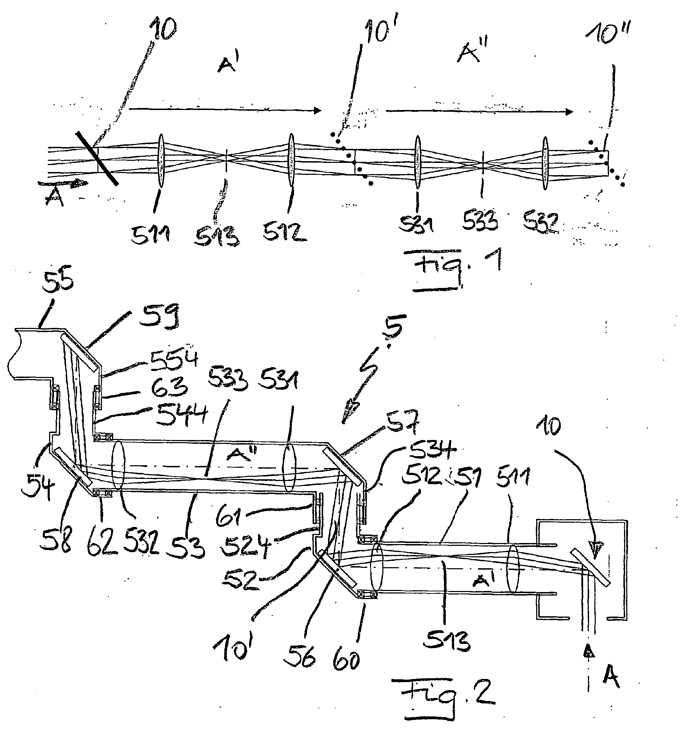

In Figur 1 ist ein schematischer optischer -hier in telezentrischer Anordnung-Strahlengang angegeben. Mit A ist die eingangsseitige Strahlung bezeichnet, die auf einen realen Scanner auftrifft. Dahinter schliesst sich eine Abbildungsstufe eines Abbildungssystems A' mit zwei Linsen 511,512 an, die zwischen sich einen Zwischenfokus 513 bilden. Hinter diesem Abbildungsstufe A' ergibt sich ein Scannerabbild 10'. Dahinter schliesst sich eine weitere Stufe A" an, die ebenfalls zwei Linsen 531 und 532 mit einem zwischen demselben angeordneten Zwischenfokus 533 aufweist. Dahinter ist das Scannerabbild 10" angeordnet.

Dieser schematische Strahlengang gemäss Figur 1 wird nunmehr in einem insgesamt mit 5 bezeichneten Spiegelgelenkarm im schematischen Querschnitt in Figur 2 näher erläutert. In dieser zeigt A die eintreffende Strahlung, die auf den ortsfesten Scanner und damit den Beginn des Spiegelgelenkarms 5 auftrifft. An den Scanner 10 schliesst sich das erste Rohrteil 11 des Spiegelgelenkarms 5 an, in welchem die erste Abbildungsstufe A' mit den zwischen sich einen Zwischenfokus 513 bildenden beiden Linsen 511 und 512 angeordnet sind.

An das feststehende Rohrteil 51 schliesst sich ein um dessen Achse über ein Lager 60 drehbares Rohrteil 52 mit einem Spiegel 56 an, der bezüglich der optischen Achse des ersten Rohrteils 51 mit einem halben rechten Winkel (45 °) angeordnet ist. Der sich auf der bezüglich des ersten Rohrteils 51 abgewandten Seite des Rohrteils 52 anschliessende Rohrstützen verläuft zu dem Spiegel 56 in einem halben rechten Winkel und rechtwinklig zu der Achse beziehungsweise zu der optischen Achse des ersten Abbildungssystems A' rechtwinklig verlaufenden Rohrachse und ist an seinem freien Ende wiederum mit einem Lager 61 an dem Rohrstück 524 versehen.

Das Rohrteil 53 ist ebenfalls mit einem rechtwinklig zu dessen Streckung seiner Achse angeordneten Rohrabschnitt 534 versehen, mit dem er um das Lager 61 drehbar ist. Zwischen diesem Rohrabschnitt 534 und dem rechtwinklig dazu verlaufenden Rohrteil 53 ist ein weiterer Spiegel 57 vorgesehen, der bezüglich der beiden Rohrachsen in einem halben rechten Winkel angeordnet ist.

Dieses Rohrteil 53 weist eine optische Abbildung A" bereitstellende weitere Abbildungsstufe mit einem Zwischenfokus 533 zwischen sich bildenden zwei Linsen 531 und 532 auf und ist an seinem hinteren Ende mit einem weiteren Lager 62 versehen.

Um dieses Lager ist ein weiteres Rohrteil 54 mit einem Spiegel 58 und einer sich rechtwinklig zu der Achse des Rohrs 53 erstreckenden Rohrabschnitt 544 versehen, an dessen Ende sich ein letzte Lager 63 befindet.

Um dieses Lager ist der Rohrabschnitt 554 des Rohrteils 55 drehbar angebracht, dessen Achse rechtwinklig zu jener des Rohrabschnitts 544 des Rohrteils 54 verläuft und mit einem einen halben rechten Winkel zu den beiden genannten Achsen aufweisenden Spiegel 59 versehen ist.

## Patentansprüche

1. Spiegelgelenkarm (5) und damit starr verbundener Laser als stationäre optische Quelle mit zumindest zwei über ein einen Umlenkspiegel (56,58) aufweisendes Gelenk (60,61,62,63) miteinander verbundenen und aufgrund dieses Gelenks zueinander in verschiedenen Raumwinkeln anzuordnenden, einen Strahlengang für die Strahlung bildenden Rohrteilen (51,52,53,54,55), mit einem ortsfesten Eingang an einem ersten Rohrteil für die Einleitung einer Strahlung (A) von der stationären optischen Quelle in Form des Lasers und mit einem von dem Ort des Eingangs verschiedenen, beliebigen Ort des Ausgangs des Spiegelgelenkarms an einem letzten Rohrteil für den Austritt der Strahlung (A), wobei vor dem Eingang des Spiegelgelenkarms ein Scanner (10) für die Ablenkung der Strahlung (A) angeordnet ist, wobei in den zumindest zwei Rohrteilen (51,52,53,54,55) des Spiegelgelenkarms ein den Scanner (10) auf einen Ort hinter dem Ausgang des Spiegelgelenkarms (5) abbildendes optisches Abbildungssystem (A', A") vorhanden ist, wobei das Abbildungssystem mit mehreren Abbildungsstufen (A', A") ausgebildet ist und wobei die Abbildungsstufe (A';A") mit zumindest zwei zwischen sich einen Zwischenfokus (513; 533) aufweisenden Linsen (511,512; 531,532) versehen ist.

2. Spiegelgelenkarm (5) nach Anspruch 1, **dadurch gekennzeichnet, dass** die die Abbildungsstufe bildenden Linsen (511,512; 531,532) als Relaislinsensystem ausgebildet sind.

3. Spiegelgelenkarm (5) nach einem der Ansprüche 1 bis 2, **dadurch gekennzeichnet, dass** an Stellen des Strahlengangs mit einem Zwischenfokus (513; 533) kein Umlenkspiegel (56,58) angeordnet ist.

4. Spiegelgelenkarm (5) nach einem der Ansprüche 1 bis 3, **gekennzeichnet durch** eine Bildrotationsoptik zum Ausgleich der Bildkoordinatenrotation.

5. Spiegelgelenkarm (5) nach einem der Ansprüche 1 bis 4, **gekennzeichnet durch** ein Messsystem zur Messung der Bildkoordinatenrotation.

6. Spiegelgelenkarm (5) nach einem der Ansprüche 1 bis 5, **gekennzeichnet durch** einen Antrieb für die Bildrotationsoptik, der anhand des Ergebnisses der Messung **durch** das Messsystem zum Ausgleich der Bildkoordinatenrotation gesteuert wird.

## Claims

1. Jointed mirror arm (5) and laser connected solidly thereto as a stationary optical source with at least two tubular parts (51, 52, 53, 54, 55) which are connected together by a joint (60, 61, 62, 63) comprising a deflecting mirror (56, 58), are arranged by means of said joint relative to one another at different solid angles and form a beam path for the radiation, with a fixed input on a first tubular part for the introduction of radiation (A) from the stationary optical source in the form of the laser and with a random location of the output of the jointed mirror arm that is different from the location of the input on a last tubular part for the output of the radiation (A), wherein before the input of the jointed mirror arm a scanner (10) is arranged for deflecting the radiation (A), wherein in the at least two tubular parts (51, 52, 53, 54, 55) of the jointed mirror arm an optical display system (A', A") is provided displaying the scanner (10) in a location behind the output of the jointed mirror arm (5), wherein the imaging system is designed to have several imaging zones (A', A") and wherein the imaging zone (A'; A") is provided with at least two lenses (511, 512; 531, 532) comprising an intermediate focus (513; 533) between them.

2. Jointed mirror arm (5) according to claim 1, **characterised in that** the lenses (511, 512; 531, 532) forming the imaging zone are in the form of a relay lens system.

3. Jointed mirror arm (5) according to one of claims 1 to 2, **characterised in that** at points of the beam path with an intermediate focus (513; 533) no deflecting mirror (56, 58) is arranged.

4. Jointed mirror arm (5) according to one of claims 1 to 3, **characterised by** an image rotation optical system for balancing the image coordinate rotation.

5. Jointed mirror arm (5) according to one of claims 1 to 4, **characterised by** a measuring system for measuring the image coordinate rotation.

6. Jointed mirror arm (5) according to one of claims 1 to 5, **characterised by** a drive for the image rotation optical system, which is controlled with reference to the result of the measurement by the measuring system for balancing the image coordinate rotation.

## Revendications

1. Branche d'articulation à miroirs (5) et laser relié rigidement à celle-ci en tant que source optique stationnaire avec au moins deux segments de tuyau (51, 52, 53, 54, 55) reliés ensemble par une articulation (60, 61, 62, 63) présentant un miroir de déviation (56, 58) et pouvant être disposés sous différents angles solides en raison de ladite articulation, et formant une trajectoire des rayons pour le rayonnement, avec une entrée fixe au niveau d'un premier segment de tuyau pour l'introduction d'un rayonnement (A) à partir de la source optique stationnaire sous la forme du laser, et avec un emplacement quelconque, différent de l'emplacement de l'entrée, de la sortie du bras d'articulation à miroirs sur un dernier segment de tuyau pour la sortie du rayonnement (A), dans laquelle un scanner (10) pour dévier le rayonnement (A) est disposé devant l'entrée du bras d'articulation à miroirs, dans laquelle dans lesdits au moins deux segments de tuyau (51, 52, 53, 54, 55) de la branche d'articulation à miroirs, il existe un système de reproduction optique (A', A") reproduisant le scanner (10) sur un emplacement derrière la sortie de la branche d'articulation à miroirs (5), dans laquelle le système de reproduction est réalisé avec plusieurs niveaux de reproduction (A', A"), et dans laquelle le niveau de reproduction (A' ; A") est muni d'au moins deux lentilles (511, 512 ; 531, 532) présentant entre elles un foyer intermédiaire (513 ; 533).

2. Branche d'articulation à miroirs (5) selon la revendication 1, **caractérisée en ce que** les lentilles (511, 512 ; 531, 532) formant le niveau de reproduction sont réalisées comme un système de lentilles de relais.

3. Branche d'articulation à miroirs (5) selon l'une quelconque des revendications 1 à 2, **caractérisée en ce qu'**aux endroits de la trajectoire des rayons à foyer intermédiaire (513 ; 533), aucun miroir de déviation (56, 58) n'est disposé.

4. Branche d'articulation à miroirs (5) selon l'une quelconque des revendications 1 à 3, **caractérisée par** une optique de rotation d'image pour compenser la rotation des coordonnées d'image.

5. Branche d'articulation à miroirs (5) selon l'une quelconque des revendications 1 à 4, **caractérisée par** un système de mesure pour mesurer la rotation des coordonnées d'image.

6. Branche d'articulation à miroirs (5) selon l'une quelconque des revendications 1 à 5, **caractérisée par** un dispositif d'entraînement pour l'optique de rotation d'image, ledit dispositif étant commandé à l'aide du résultat de la mesure par le système de mesure pour compenser la rotation des coordonnées d'image.
